# EUROPEAN PATENT APPLICATION

(11) **EP 4 593 120 A1**
(43) Date of publication of application: **30.07.2025**
(21) Application number: 23888832.5
(22) Date of filing: 02.06.2023
(51) Int. Cl.: H01M 4/62, H01M 4/139, H01M 4/48, H01M 4/583, H01M 4/02

(54) **ANODE MIXTURE SLURRY, ANODE MANUFACTRURED FROM ANODE MIXTURE SLURRY AND LITHIUM ION BATTERY COMPRISING ANODE**

(30) Priority: 10.11.2022 KR 20220149738
(71) Applicant: SK On Co., Ltd., Seoul 03161 (KR)
(72) Inventor: JO, Yeong-Min, Daejeon 34124 (KR); KIM, In-Ha, Daejeon 34124 (KR); PARK, Sung-Jun, Daejeon 34124 (KR); JO, Byoung-Wook, Daejeon 34124 (KR)
(74) Representative: Prüfer & Partner mbB Patentanwälte · Rechtsanwälte
(86) International application number: PCT/KR2023/007597
(87) International publication number: WO 2024/101563

(57) **Abstract**

The present embodiment relates to an anode mixture slurry, an anode manufactured from the anode mixture slurry and a lithium-ion battery comprising the anode, wherein the anode mixture slurry comprises a silicon-based anode active material and a photocurable binder, and the photocurable binder comprises: a first acrylate monomer or oligomer having two or fewer functional groups and an acrylate end; and a second acrylate monomer or oligomer having three or more functional groups and an acrylate end.

## Description

### Technical Field

The present disclosure relates to an anode mixture slurry, an anode for a secondary battery manufactured from the anode mixture slurry and a lithium-ion battery comprising the anode.

### Background Art

Recently, with technological development and an increase in demand for portable devices such as portable computers, portable phones, and cameras, as well as electric vehicles, demand for secondary batteries as an energy source is rapidly increasing, and among such secondary batteries, lithium secondary batteries, which exhibit high energy density and operating potential, long cycle lifespan, and low self-discharge rate, have been studied extensively, and have also been commercialized and widely used.

In general, lithium secondary batteries are charged and discharged by repeating a process in which lithium ions from a cathode are inserted and deintercalated into the anode. As the insertion and deintercalation of lithium ions is repeated, the bond between the electrode active material or the conductive material becomes loose, the contact resistance between particles increases, and as a result, the ohmic resistance of the electrode increases, which may deteriorate battery characteristics. Accordingly, the binder may use an elastic polymer that may buffer the expansion and contraction of the electrode active material due to the insertion and deintercalation of lithium ions in the electrode.

With the technological development of and an increase in demand for electric vehicles, demand for secondary batteries as an energy source rapidly increases. Among such secondary batteries, lithium secondary batteries having high energy density and discharge voltage have been studied extensively and are now commercialized and widely used. These lithium secondary batteries generally use lithium transition metal oxides as cathode active materials, and use carbon-based materials as anode active materials.

An anode formed of carbon-based materials has a limited theoretical maximum capacitance, which limits capacitance increase. Accordingly, a large amount of researches have been conducted to use silicon, which has a larger theoretical maximum capacitance than carbon-based materials, as an anode active material.

However, silicon has a problem in that the volume change due to the reaction with lithium during charging and discharging significantly increases, so that the anode active material is detached from an anode current collector during continuous charging and discharging, or the resistance increases due to a large change in a contact interface between the anode active materials, resulting in a rapid decrease in capacitance as the charging and discharging cycles proceed, shortening the cycle life.

Accordingly, there is a high need for the development of binders and anode materials that may prevent separation by strongly bonding between anode active materials or between anode active materials and current collectors during anode manufacturing, and may control the volume expansion of anode active materials occurring during repeated charging and discharging to improve the structural stability of the electrode and the performance of the battery.

In consideration of these problems, some prior art references suggest a technique of using polyamic acid as a binder and applying an anode mixture including the same on a current collector and then performing a heat treatment at high temperature (300°C or higher) to perform conversion into polyimide by imidization reaction, in order to suppress the decrease in bonding strength with the current collector and the bonding strength between active materials due to volume change of silicon-based anode active materials. This method requires heat treatment at high temperature for a relatively long time (e.g., 10 hours).

Furthermore, Japanese Patent Application Publication No. 10-162832 discloses a technology for manufacturing a cathode or an anode of a solid electrolyte battery by photopolymerization using a monomer having a polymerizable functional group at a molecular chain end and including a fluoroalkyl group in a molecular structure as a binder.

Additionally, Japanese Patent Application Publication No. 2005-44681 discloses a technology for manufacturing a cathode or an anode of a lithium secondary battery having a polymer solid electrolyte by photopolymerization or thermal polymerization using a urethane (meth)acrylate compound (A) having a (meth)acryloyl group at a molecular chain end and/or a polyisocyanate derivative (B) having at least one (meth)acryloyl group at a molecular chain end and a balance of hydrocarbon groups, as a binder.

### Summary of Invention

### Technical Problem

In a lithium secondary battery using a silicon-based anode active material, there is a high need for a manufacturing technology that provides strong bonding force that may prevent a large volume change of an anode active material during charging and discharging, while being economical in terms of process.

Accordingly, an embodiment of the present disclosure is to improve bonding force between anode active materials by increasing cross-linking density in an anode including a silicon-based anode active material.

### Solution to Problem

According to an aspect of the present disclosure, provided is an anode mixture slurry including: a silicon-based anode active material and a photocurable binder, wherein the photocurable binder includes: a first monomer or oligomer having two or fewer functional groups; and a second monomer or oligomer having three or more functional groups.

The photocurable binder may be an acrylate monomer or oligomer having an acrylate functional group in an end thereof.

A weight ratio of the first monomer or oligomer and the second monomer or oligomer may be 50 to 95 wt%: 5 to 50 wt%.

The photocurable binder may have a viscosity of 10,000 cps or less at a temperature of 25°C.

The photocurable binder may be at least one selected from the group consisting of: an acrylate monomer or oligomer having an acrylate end in an ethylene glycol repeating unit; an acrylate monomer or oligomer having an acrylate end in a urethane repeating unit; an acrylate monomer or oligomer having an acrylate end in a carboxylic acid structure repeating unit; and an acrylate monomer or oligomer having an acrylate end in a hydroxy structure repeating unit.

The photocurable binder may be 1 to 20 wt% with respect to a total solid content of the anode mixture slurry.

The anode mixture slurry may further the carbon-based anode active material.

The carbon-based anode active material and the silicon-based anode active material may be included in a weight ratio of 60 to 98:2 to 40 with respect to a total content of the anode active material.

The anode mixture slurry may further include a photoinitiator.

The photoinitiator may be included in an amount of 10 wt% or less with respect to a weight of the photocurable binder.

The photoinitiator may be at least one selected from the group consisting of: azobisisobutyronitrile; benzoyl peroxide; di-t-butyl peroxide; cumin hydroperoxide; and diisobutyl peroxide.

According to another aspect of the present disclosure, provided is an anode including an anode current collector; and an anode composite layer including a silicon-based anode active material and a photocurable binder on the surface of the anode current collector, wherein the binder includes a photocurable binder including a monomer or oligomer having at least one functional group; and a photopolymerized binder in which the photocurable binder is polymerized.

The photocurable binder may be an acrylate monomer or oligomer having an acrylate functional group in an end.

The acrylate monomer or oligomer may include a first acrylate monomer or oligomer having two or fewer functional groups and a second acrylate monomer or oligomer having three or more functional groups.

A content of the photocurable binder may be 0.1 to 15 wt% with respect to a total weight of the binder.

The photocurable binder may have a weight average molecular weight of 100 to 10,000.

The anode may further include a photoinitiator.

The photoinitiator may be included in an amount of 0.01 to 5 wt% with respect to a weight of the photocurable binder.

A second anode mixture layer is further included between the anode current collector and the anode mixture layer, and the second anode mixture layer includes a carbon-based anode active material and a second binder different from the photocurable binder.

The second binder may include at least one selected from the group consisting of: styrene-butadiene rubber; polyvinylidene fluoride; and polyacrylic acid.

At least one of the anode mixture layer and the lower anode mixture layer may further include at least one thickener selected from the group consisting of: carboxymethyl cellulose, methyl cellulose, hydroxypropyl cellulose, methyl hydroxypropyl cellulose, and cellulose gum.

### Advantageous Effects of Invention

According to an embodiment of the present disclosure, crosslinking density by a crosslinking reaction of the cured binder is increased to improve bonding force between active materials, thereby controlling the volume shrinkage/expansion of silicon.

### Brief Description of Drawings

FIG. 1 is a schematic diagram illustrating the concept of binding an anode active material by polymerizing a cured binder through photocuring or electron beam curing, in an anode composite layer including a photocurable binder.
FIG. 2 is an image of a cross-section of an anode manufactured in Inventive Example 1.

### Best Mode for Invention

The present disclosure provides an anode mixture slurry. Specifically, the present disclosure relates to an anode mixture slurry for manufacturing an anode including a silicon-based anode active material to increase capacitance as an anode active material, and provides an anode mixture slurry capable of preventing desorption of an anode active material due to volume expansion in an anode including a silicon-based anode active material having a large volume expansion during a charge/discharge process of a battery.

The anode composite slurry may include a silicon-based anode active material as an anode active material, and the silicon-based anode active material includes silicon, and is not particularly limited as long as the material may be used as an anode active material in general, and for example, the silicon-based anode active material may use at least one selected from the group consisting of SiOx (0≤x<2) particles, Si-C composites, and Si-Y alloys (where Y is an element selected from the group consisting of alkali metals, alkaline earth metals, transition metals, Group 13 elements, Group 14 elements, rare earth elements, and combinations thereof), and may be, for example, SiO.

The anode composite slurry includes a photocurable binder. The photocurable binder may have a functional group and may thus be curable by light, and may exhibit a characteristic of binding the anode active material by curing. For example, the photocurable binder may be a monomer or oligomer having a functional group.

In the present disclosure, the monomer having the functional group is a unit compound providing a repeating unit structure forming a polymer, and an oligomer refers to a polymerization product having a repeating unit structure by polymerization of the unit compound and having a weight average molecular weight of 10,000 g/mol or less. Accordingly, in addition to the monomer, when the polymerization product has a weight average molecular weight within the range, dimers, trimers, or the like, are also included in the oligomer of the present disclosure.

The weight average molecular weight refers to an average molecular weight obtained by averaging the molecular weights of component molecular species of a polymer compound having a molecular weight distribution by weight fraction, and may be measured using a light scattering method that utilizes a phenomenon in which light of the same frequency as the incident light is scattered after the incident light collides with the polymer particles.

Hereinafter, the photocurable binder included in the anode composite slurry is, unless otherwise specified, a monomer or oligomer having a functional group, and may be, for example, an acrylate monomer or oligomer having an acrylate functional group in an end.

The acrylate monomer or oligomer may be, for example, an acrylate monomer or oligomer having an ethylene glycol repeating unit and an acrylate end, and may be, for example, polyethylene glycol diacrylate or ethoxylated trimethylolpropane triacrylate. As another example, the acrylate monomer or oligomer may be an acrylate monomer or oligomer having a urethane repeating unit and an acrylate end, which is water-insoluble, and may be provided as a polyurethane dispersion dispersed in water. As another example, the acrylate monomer or oligomer may be an acrylate monomer or oligomer having an acid-functional carboxylic acid (-COOH) structure repeating unit including a carboxylic acid and an acrylate end. As another example, the acrylate monomer or oligomer may be an acrylate monomer or oligomer thereof having a hydroxyl-functional hydroxyl (-OH) structure repeating unit including a hydroxy and an acrylate end.

The acrylate monomer or oligomer may be used alone, or two or more types thereof may be mixed and used.

Specifically, the photocurable binder may be used by mixing a monomer or oligomer (first monomer or oligomer) having two or fewer functional groups and a monomer or oligomer (second monomer or oligomer) having three or more acrylate functional groups.

More specifically, an acrylate monomer or oligomer (first acrylate monomer or oligomer) having two or fewer acrylate functional groups at an end and an acrylate monomer or oligomer (second acrylate monomer or oligomer) having three or more acrylate functional groups at an end may be mixed and used.

In this manner, when a monomer or oligomer having two or fewer functional groups and a second monomer or oligomer having three or more functional groups are mixed and used, the functional groups may form a three-dimensional network by cross-linking each other during the curing process by light, and the photocurable binder may surround the silicon-based anode active material by the formed three-dimensional network, which may increase the cross-linking density, thereby suppressing shrinkage and expansion of the volume of the silicon-based anode active material during the charging and discharging process, and further preventing the silicon-based anode active material from falling off.

In the photocurable binder, the acrylate monomer or oligomer having two or fewer functional groups and an acrylate monomer or oligomer having three or more functional groups may be mixed in a weight ratio of, for example, 50 to 95 wt% and 5 to 50 wt%, but the present disclosure is not limited thereto. When the content of the acrylate monomer or oligomer having the three or more functional groups is less than 5 wt%, it may be difficult to achieve sufficient crosslinking density, and when the content thereof exceeds 50 wt%, the crosslinking density may increase, which may cause shrinkage problems in the electrode.

The photocurable binder may have a viscosity of 10,000 cps or less at a temperature of 25°C. When the viscosity of the photocurable binder exceeds the range, the coating processability may deteriorate due to the increase in the viscosity of the slurry.

The photocurable binder may be included in an amount of 1 to 20 wt% with respect to the total solid content of the anode mixture slurry. When the content of the photocurable binder is less than 1 wt%, the dispersibility of the active material may deteriorate, and further, bonding force between the active material and the current collector may not be sufficient, and when the content thereof exceeds 20 wt%, the resistance may increase.

The anode mixture slurry including the photocurable binder may further include a photoinitiator. The photoinitiator initiates the polymerization reaction of the photocurable binder, and a photoinitiator commonly used may be used. The photoinitiator may include, for example, azobisisobutyronitrile, benzoyl peroxide, di-t-butyl peroxide, cumin hydroperoxide, and diisobutyl peroxide, and any one thereof may be used, or two or more thereof may be mixed and used.

The photoinitiator may be included in an amount of 10 wt% or less, more specifically 0.01 to 5 wt%, with respect to the weight of the photocurable binder. When the content of the photoinitiator is less than 0.01 wt% with respect to the weight of the photocurable binder, there is a problem that propagation is difficult due to low reactivity, and when the content thereof exceeds 10 wt%, an increase in costs may be caused due to excessive use, and further, an increase in resistance due to the residue of unreacted photoinitiator may be caused.

The anode composite slurry of the present disclosure may further include a carbon-based anode active material together with the silicon-based anode active material. The carbon-based anode active material is not particularly limited, and for example, may be at least one selected from the group consisting of artificial graphite, natural graphite, and graphitized mesocarbon microbeads, and more specifically, artificial graphite may be used as the carbon-based anode active material, and artificial graphite and natural graphite may be mixed and used.

When the silicon-based anode active material and the graphite-based anode active material are mixed and used, the graphite-based anode active material and the silicon-based anode active material may be included in a weight ratio of 60 to 98:2 to 40. When the content of the silicon-based anode active material is less than 2 wt%, the capacitance increase effect is low, and when the content thereof exceeds 40 wt%, the volume of the excessive silicon-based active material may be contracted and expanded, resulting in electrode detachment.

Additionally, the anode composite slurry may include a conductive agent. The conductive agent may use carbon nanotubes (CNT) to further suppress volume expansion of the silicon-based anode active material. The CNT may use any of single-walled carbon nanotubes (SWCNT), double-walled carbon nanotubes (TWCNT), and multi-walled carbon nanotubes (MWCNT), and the present disclosure is not particularly limited thereto.

The conductive agent may be included in an amount of 0.1 to 10 wt% with respect to the total weight of the solids. When the content of the conductive agent is less than 0.1 wt%, resistance may increase, and when the content thereof exceeds 10 wt%, capacitance reduction and cost increase may occur.

The anode composite slurry may further include a second binder commonly used to form an anode composite layer together with a photocurable binder.

Examples of the second binder may include at least one selected from the group consisting of styrene-butadiene rubber (SBR), acrylated styrene-butadiene rubber, acrylonitrile-butadiene rubber, acrylic rubber, butyl rubber, ethylene-propylene copolymer, polyepichlorohydrin, polyphosphazene, polyacrylonitrile, polystyrene, ethylene-propylene-diene copolymer, polyvinylidene fluoride (PVDF), polyvinylpyridine, chlorosulfonated polyethylene, latex, polyester resin, acrylic resin, phenolic resin, epoxy resin, polyvinyl alcohol resin, acrylate resin, polyaniline (PANI), polythiophene (PT), polyacetylene, polypyrrole (PPy), and poly(3,4-ethylene dioxythiophene) (PEDOT).

If the second binder is further included, the content thereof is not particularly limited, but may be included in a content of, for example, 0.1 to 10 wt% with respect to the total weight of the solid content. When the content of the second binder is less than 0.1 wt%, there may be a problem of reduced binding force, and when the content thereof exceeds 10 wt%, this may cause a reduction in capacitance.

The anode composite slurry of the present disclosure may further include a thickener. The thickener may include at least one selected from the group consisting of carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (methyl ethyl hydroxyethyl cellulose, MEHEC) and cellulose gum, but the present disclosure is not limited thereto.

The thickener may be included in a content of 0.1 to 10 wt% with respect to the total solid content of the anode mixture slurry. When the content of the thickener is less than 0.1 wt%, a thickening effect is insignificant, and when the content thereof exceeds 10 wt%, this may cause an increase in resistance and a decrease in capacitance.

As described above, a slurry may be manufactured by mixing the silicon-based anode active material, the photocurable binder, the photoinitiator as needed, and an additive component as needed with a solvent. The solvent may use water. In this case, water may be added to the slurry so that the solid content is 20 to 70 wt%.

Manufacturing the anode according to the present disclosure includes an operation of applying an anode mixture slurry including the photocurable binder onto an anode current collector.

The anode current collector may be suitably used if it has conductivity without causing chemical changes in the battery, and is not particularly limited. The anode current collector may use, but is not limited to, for example, copper, stainless steel, aluminum, nickel, titanium, calcined carbon; a surface of copper or stainless steel surface-treated with, but is not limited to, carbon, nickel, titanium, or silver, or an aluminum-cadmium alloy. Additionally, the anode current collector may form fine irregularities on a surface of a substrate as described above, and binding force of the anode active material to the current collector may be strengthened by such irregularities. Furthermore, the anode current collector may have various forms, but is not limited to, a film, a sheet, a foil, a net, a porous body, a foam, or a non-woven fabric.

In manufacturing an anode using an anode mixture slurry including a photocurable binder provided in the present disclosure, an operation of applying the anode mixture slurry on the anode current collector and then drying the same is included. The drying is for removing a solvent included in the slurry, and the process conditions are not particularly limited, and may be performed under process conditions commonly used for drying the anode slurry. For example, the drying may be performed under a temperature condition of 80 to 220°C.

After the drying process is completed, a rolling process may be performed. The rolling may make the anode mixture layer have a predetermined electrode density and may contribute to flattening the anode mixture layer. The rolling may be selected depending on the desired electrode density, and is not particularly limited, and may be performed under commonly performed process conditions.

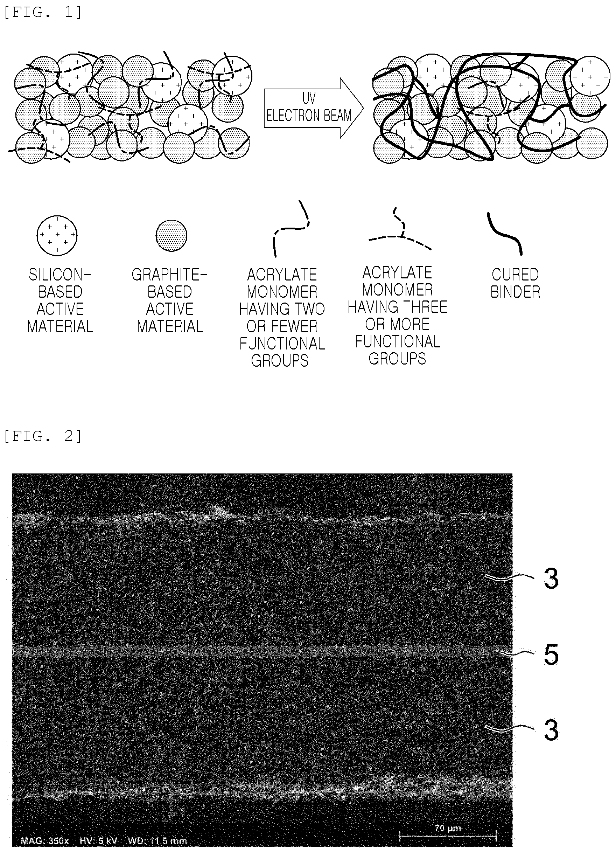

Furthermore, a curing process is included for polymerizing the photocurable binder included in the anode mixture layer. By the curing process, the photocurable binder is polymerized to form a network between the functional groups, thereby binding the anode active material. The concept of forming a network by curing the photocurable binder and binding the anode active material thereby is schematically illustrated in FIG. 1.

The curing process may be performed after the drying process or after the rolling process, and is not particularly limited thereto. However, performing the curing operation after the rolling may increase the light transmittance in the process of irradiating light for polymerization of the photocurable binder, thereby further improving the photopolymerization efficiency.

As illustrated in FIG. 1, the monomer and/or oligomer of the photocurable binder included in the anode mixture slurry is polymerized by irradiating light (UV) or an electron beam to form a network. More specifically, the photocurable binder is polymerized by the curing process to form a network by cross-linking between functional groups, and the silicon-based anode active material may be disposed within the network, thereby suppressing volume expansion and further preventing the anode active material from falling off.

The curing process may be performed by UV light irradiation or electron beam (E-Beam) irradiation, and more specifically, in the case in which the photoinitiator is included, the curing process may be performed by UV light irradiation.

The anode composite layer obtained by the present disclosure is formed on the anode current collector, and the anode composite layer includes a silicon-based anode active material and a binder, and the binder includes a photopolymerized binder which is a monomer or oligomer having at least one functional group, and a photopolymerized binder which is a polymer obtained by photopolymerization of the monomer or oligomer having the functional group, which is the photopolymerized binder.

For example, the photopolymerized binder may be a monomer or oligomer having at least one functional group, for example, an acrylate monomer or oligomer having an acrylate group at an end as a functional group, and the polymer obtained by photopolymerization of the monomer or oligomer may be an acrylate-based polymer.

The acrylate-based polymer is produced by photopolymerization of the acrylate monomer or oligomer having the acrylate end, and may form a three-dimensional network structure by crosslinking between functional groups of the acrylate monomer or oligomer, and the silicon-based anode active material may be disposed within the network structure to suppress desorption of the anode active material, and furthermore, expansion of the silicon-based anode active material may be suppressed in volume during the charging and discharging process.

Among the anode mixture slurry for forming the anode mixture layer, a monomer or oligomer, specifically an acrylate monomer or oligomer having an acrylate end, is included as a photocurable binder, which is included in a relatively small amount of 1 to 20 wt% with respect to the total solid content. Accordingly, the photocurable binder may be partially prevented from propagating by the photocuring reaction by the anode active material, so that cross-linking between the photocurable binders may not occur completely, and thus, the photocurable binder may remain in a state of an acrylate monomer or oligomer. Accordingly, the anode mixture layer provided by the present disclosure may include some acrylate monomers or oligomers having an acrylate end. That is, the anode mixture layer according to the present disclosure may have a wide binder molecular weight distribution characteristic from a monomer to a polymer.

The uncured acrylate monomer or oligomer present in the anode composite layer may be present in an amount of 20 wt% or less, more specifically 0.1 to 15 wt% or 1 to 10 wt%, of the total photocurable binder content. When the uncured acrylate monomer or oligomer exceeds 20 wt% of the total photocurable binder content, there is a problem that the crosslinking degree is low and the increase in bonding strength is limited.

The content of the unreacted acrylate monomer or oligomer present in the anode composite layer may be measured by eluting the acrylate monomer and oligomer from the anode composite layer using a solvent capable of dissolving the acrylate monomer or oligomer having the acrylate end. In this case, the solvent that may be used may be selected from, for example, distilled water, ethanol, acetone, and N-Methyl-2-pyrrolidinone(NMP), but the present disclosure is limited thereto.

The content of unreacted acrylate monomer or oligomer among the total binder present in the anode composite layer may be measured by comparing the content after removing the acrylate monomer or oligomer having the acrylate end from the anode composite layer with the content before removal thereof.

Specifically, the unreacted acrylate monomer or oligomer is eluted and removed using a solvent capable of dissolving the unreacted acrylate monomer or oligomer, and then, the corresponding electrode is completely dried again in an oven at 140°C, and may be burned while increasing the temperature to 500°C using a thermogravimetric analysis (TGA) device, and in this manner, the content (reduction amount: Wa) reduced by combustion under conditions of 500°C or lower from the total content of the anode composite layer may be measured.

Additionally, for an electrode not performing the elution removal of the unreacted acrylate monomer or oligomer, the reduced content (reduction amount: Wb) may be measured under the same combustion conditions as described above using TGA equipment.

The content of the unreacted acrylate monomer and oligomer may be obtained by calculating a difference between a reduction amount (Wb) during TGA combustion before the elution and a reduction amount (Wa) during TGA combustion after the elution.

Furthermore, in the process of eluting the unreacted acrylate monomer and oligomer included in the anode mixture layer using the solvent, an optionally included unreacted photoinitiator may be eluted. The unreacted photoinitiator may be 5 wt% or less with respect to 100 wt% of the photocurable binder present in the anode mixture layer, for example, 0.01 to 5 wt%.

In the present disclosure, the anode may be a multilayer anode. For example, the anode current collector may include two or more anode composite layers, and more specifically, may have a second anode composite layer between the anode current collector and the anode composite layer. For example, when the anode is a multilayer anode including two anode composite layers, one of the two anode composite layers may be an anode composite layer including the photocurable binder provided by the present disclosure, and further, the anode composite layer including the photocurable binder provided by the present disclosure may be disposed at a surface of the anode.

More specifically, a second anode composite layer having a different composition may be included between the anode current collector and the anode composite layer provided by the present disclosure. The second anode composite layer may have a different composition from the anode composite layer of the present disclosure. For example, the second anode composite layer may be an anode composite layer formed of an anode composite slurry including a carbon-based active material, a particulate binder, a thickener, and a conductive agent. In this case, the carbon-based active material, the particulate binder, the thickener, and the conductive agent are as described above, and redundant description thereof will be omitted.

The second anode composite layer may be formed on the anode current collector. The photocurable binder may form a three-dimensional network by cross-linking of the binder, so that the silicon-based anode active material is trapped inside the network to suppress volume expansion thereof and thus, detachment thereof is prevented. However, the particulate binder may provide high bonding force to the current collector, thereby more effectively preventing the anode composite layer from being peeled off from the current collector.

Meanwhile, the second anode composite layer may also include a silicon-based anode active material, and the silicon-based anode active material may have a lower content than the silicon-based anode active material included in the anode composite layer.

Additionally, when the second anode composite layer includes the silicon-based anode active material, the second anode composite layer may or may not include the photocurable binder. In this case, when the photocurable binder is included, the content of the photocurable binder included in the anode composite layer may be less than that of the photocurable binder.

### Mode for Invention

Hereinafter, the present disclosure will be described in more detail with examples. However, the following examples are provided to illustrate one example according to the present disclosure, and are not intended to limit the present disclosure thereby.

### Inventive Example 1

Based on the solid content weight, 15 wt% of silicon oxide SiOx (0<x<2) and 78 wt% of graphite as a anode active material, 3 wt% of a curable binder, as a binder, in which polyethylene glycol diacrylate monomer (viscosity 50 cps at a temperature of 25°C) and ethoxylated trimethylolpropane triacrylate monomer (viscosity 100 to 200 cps at a temperature of 25°C) were mixed in a weight ratio of 75:25, 2 wt% of SBR as a particulate binder, and 2 wt% of CMC as a thickener were mixed with water to manufacture an anode mixture slurry. In this case, a solid content of the anode mixture slurry was 40 wt%.

Copper foil (thickness: 8µm) was prepared as a anode current collector, and the anode mixture slurry was applied on both surface of the copper foil at a coating amount of 10 mg/cm² to manufacture an anode sheet having an anode mixture slurry coating layer formed thereon. The anode sheet having the anode mixture slurry coating layer formed thereon was inserted in a drying oven and dried at 190°C to remove water.

Then, the dried anode sheet was rolled to manufacture an anode (total thickness: 188um) having an anode mixture layer having a thickness of 90um formed on both surfaces of the copper foil, and then, the binder was cured by electron beam (E-Beam) irradiation (Surface Does 100kGy).

An cross-section of the anode manufactured therefrom was captured, and a captured image is shown in FIG. 2. In FIG. 2, 3 represents the copper foil as an anode collector, and 5 represents the anode mixture layer.

The bonding force (kN/m) before/after electron beam irradiation was measured for the obtained anode composite layer, and results thereof are shown in Table 1.

The bonding force before/after electron beam irradiation was measured using SAICAS (EN-EX Model), and horizontal force applied when cutting a composite electrode to a certain depth with a micro blade and peeling the anode composite layer in a direction parallel to the current collector was measured, and a value thereof was described as the bonding force before/after electron beam irradiation.

The anode current collector of copper foil was removed from the manufactured electrode, and the anode composite layer was recovered, and this was dissolved in distilled water at a concentration of 20 wt%, and stirred at a temperature of 60°C for 24 hours. As a result, a mixture solution in which the anode composite layer was dissolved was obtained.

The anode active material in the anode composite layer was dissolved as fine particles, and the anode active material was filtered and removed from the mixture solution using a 0.4 µm filter, and a filtrate passing through the filter was recovered. The recovered filtrate was used to measure the content of ethylene glycol diacrylate monomer and ethoxylated trimethylolpropane triacrylate monomer using liquid chromatography.

It was confirmed that the ethylene glycol diacrylate monomer was eluted at about 5 wt% relative to the content used in electrode manufacturing, and it was confirmed that the ethoxylated trimethylolpropane triacrylate monomer was eluted at about 8 wt% relative to the content used in electrode manufacturing.

### Inventive Example 2

Based on the solid content weight, 94 wt% of graphite as an anode active material, 3 wt% of SBR as a particulate binder, and 3 wt% of CMC as a thickener were mixed with water to manufacture a first anode composite slurry. In this case, the solid content of the first anode composite slurry was 45 wt%.

15 wt% of silicon oxide SiOx (0<x<2) and 78 wt% of graphite as a anode active material, 3 wt% of a curable binder, as a binder, in which polyethylene glycol diacrylate monomer (viscosity at a temperature of 25°C: 50 cps) and ethoxylated trimethylolpropane triacrylate monomer (viscosity at a temperature of 25°C: 100 to 200 cps) were mixed in a weight ratio of 75:25, 2 wt% of SBR as a particulate binder, and 2 wt% of CMC as a thickener were mixed with water to manufacture a second anode mixture slurry. In this case, the solid content of the second anode mixture slurry was 40 wt%.

Copper foil was prepared as a anode current collector, and the first anode mixture slurry was applied on both surfaces of the copper foil at a coating amount of 5 mg/cm² to form a first anode mixture slurry coating layer, and then, a second anode mixture slurry was applied on the first anode mixture slurry coating layer in a coating amount of 5 mg/cm² to form a second anode mixture slurry coating layer.

An anode sheet on which the two-layer anode mixture slurry coating layer was formed was inserted in a drying oven and dried under the same conditions as in Example 1 to remove water as a solvent.

Then, the dried anode sheet was rolled in the same manner as in Example 1 and then cured with an electron beam to manufacture an anode having a thickness ratio of the first anode mixture layer and the second anode mixture layer of 5:5 and a thickness of 90 µm formed on both surfaces of the copper foil.

The bonding strength (kN/m) according to thickness of the obtained anode composite layer was measured, and results thereof are shown in Table 1.

### Comparative Example 1

Except for not including a cured binder in the anode mixture slurry, the same anode mixture slurry as Inventive Example 1 (15 wt% of silicon oxide, 78 wt% of graphite, 2 wt% of SBR as a particulate binder, and 5 wt% of CMC as a thickener) was used, and the same method as Inventive Example 1 was used to apply the anode mixture slurry to both surfaces of the copper foil and dry the anode mixture slurry to manufacture a dried anode sheet.

Furthermore, the dried anode sheet was rolled to manufacture an anode (total thickness: 188 µm) in which a anode mixture layer having a thickness of 90 µm was formed on both surfaces of the copper foil.

The bonding strength (kN/m) of the anode mixture layer of the obtained anode was measured according to the thickness, and results thereof are shown in Table 1.

### Comparative Example 2

When manufacturing the second anode mixture slurry, excluding the ethoxylated trimethylolpropane triacrylate monomer (viscosity 100 to 200 cps at 25°C) as a curable binder, only 3 wt% of polyethylene glycol diacrylate monomer (viscosity 50 cps at 25°C) was used to manufacture an anode mixture slurry (15 wt% of silicon oxide, 78 wt% of graphite, 3 wt% of polyethylene glycol diacrylate monomer, 2 wt% of SBR as a particulate binder, and 2 wt% of CMC as a thickener), and the slurry was applied to both surfaces of a copper foil in the same manner as in Inventive Example 1 and was dried to manufacture a dried anode sheet.

Furthermore, the dried anode sheet was rolled to manufacture an anode (total thickness: 188 µm) in which a anode mixture layer having a thickness of 90 µm was formed on both surfaces of the copper foil.

The bonding strength (kN/m) according to thickness of the obtained anode composite layer was measured, and results thereof are shown in Table 1.

**Table 1:**

| Thickness (µm) | Inventive Example 1 | Inventive Example 2 | Comparative Example 1 | Comparative Example 2 |
|---|---|---|---|---|
| 3 | 0.055 | 0.056 | 0.046 | 0.050 |
| 5 | 0.116 | 0.118 | 0.089 | 0.101 |
| 8 | 0.151 | 0.150 | 0.093 | 0.125 |

As may be seen from the results in Table 1 above, when the cured binder provided in the present disclosure is used, the silicon-based anode active material is cross-linked by the curing of the cured binder to form a network, thereby firmly binding the silicon-based anode active material. For example, it may be seen that the bonding strength of Inventive Examples 1 and 2 at a thickness of 8 µm was improved by 30% or more, as compared to Comparative Example 1. Furthermore, when comparing Inventive Example 1 and Comparative Example 2, it may be confirmed that when a cured binder having three or more functional groups was mixed and used, an additional increase in bonding strength was observed as compared to when a cured binder having a bifunctional group was used alone due to an increase in cross-linking density.

### Description of Reference Characters

3: Anode current collector
5: Anode composite layer

## Claims

1. An anode mixture slurry, comprising: a silicon-based anode active material and a photocurable binder,
wherein the photocurable binder comprises: a first monomer or oligomer having two or fewer functional groups; and a second monomer or oligomer having three or more functional groups.

2. The anode mixture slurry of claim 1, wherein the photocurable binder is an acrylate monomer or oligomer having an acrylate functional group in an end thereof.

3. The anode mixture slurry of claim 1, wherein a weight ratio of the first monomer or oligomer and the second monomer or oligomer is 50 to 95: 5 to 50.

4. The anode mixture slurry of claim 1, wherein the photocurable binder has a viscosity of 10,000 cps or less at a temperature of 25°C.

5. The anode mixture slurry of claim 1, wherein the photocurable binder is at least one selected from the group consisting of: an acrylate monomer or oligomer having an acrylate end in an ethylene glycol repeating unit; an acrylate monomer or oligomer having an acrylate end in a urethane repeating unit; an acrylate monomer or oligomer having an acrylate end in a carboxylic acid structure repeating unit; and an acrylate monomer or oligomer having an acrylate end in a hydroxy structure repeating unit.

6. The anode mixture slurry of claim 1, wherein the photocurable binder is 1 to 20 wt% with respect to a total solid content of the anode mixture slurry.

7. The anode mixture slurry of claim 1, further comprising: a carbon-based anode active material.

8. The anode mixture slurry of claim 7, wherein the carbon-based anode active material and the silicon-based anode active material are included in a weight ratio of 60 to 98:2 to 40 with respect to a total content of the anode active material.

9. The anode mixture slurry of one of claims 1 to 8, further comprising: a photoinitiator.

10. The anode mixture slurry of claim 9, wherein the photoinitiator is included in an amount of 10 wt% or less with respect to a weight of the photocurable binder.

11. The anode mixture slurry of claim 9, wherein the photoinitiator is at least one selected from the group consisting of: azobisisobutyronitrile; benzoyl peroxide; di-t-butyl peroxide; cumin hydroperoxide; and diisobutyl peroxide.

12. An anode comprising an anode current collector; and an anode composite layer including a silicon-based anode active material and a binder on at least one surface of the anode current collector,
wherein the binder includes a photocurable binder including a monomer or oligomer having at least one functional group; and a photopolymerized binder in which the photocurable binder is photopolymerized.

13. The anode of claim 12, wherein the photocurable binder is an acrylate monomer or oligomer having an acrylate functional group in an end.

14. The anode of claim 13, wherein the acrylate monomer or oligomer includes a first acrylate monomer or oligomer having two or fewer functional groups and a second acrylate monomer or oligomer having three or more functional groups.

15. The anode of claim 12, wherein a content of the photocurable binder is 0.1 to 15 wt% with respect to a total weight of the binder.

16. The anode of claim 12, wherein the photocurable binder has a weight average molecular weight of 100 to 10,000.

17. The anode of one of claims 12 to 16, further comprising: a photoinitiator.

18. The anode of claim 17, wherein the photoinitiator is included in an amount of 0.01 to 5 wt% with respect to a weight of the binder.

19. The anode of claim 12, wherein a second anode mixture layer is further included between the anode current collector and the anode mixture layer, and
the second anode mixture layer includes a carbon-based anode active material and a second binder different from the binder.

20. The anode of claim 19, wherein the second binder includes at least one selected from the group consisting of: styrene-butadiene rubber; polyvinylidene fluoride; and polyacrylic acid.

21. The anode of claim 19, wherein at least one of the anode mixture layer and the second anode mixture layer further includes at least one thickener selected from the group consisting of: carboxymethyl cellulose, methyl cellulose, hydroxypropyl cellulose, methyl hydroxypropyl cellulose, and cellulose gum.
